# EUROPÄISCHE PATENTSCHRIFT

(11) **EP 2 700 885 B1**
(45) Veröffentlichungstag und Bekanntmachung des Hinweises auf die Patenterteilung: **17.06.2015**
(21) Anmeldenummer: 12006063.7
(22) Anmeldetag: 25.08.2012
(51) Int. Cl.: F24F 13/14, F16K 1/22, F23J 13/06, E04B 1/70

(54) **Zuluft-Wanddurchführung**
Air feed wall bushing
Passage de mur pour arrivée d'air

(43) Veröffentlichungstag der Anmeldung: 26.02.2014
(73) Patentinhaber: CB-tec GmbH, 87789 Woringen (DE)
(72) Erfinder: Gegler, Constanze, 87740 Buxheim (DE); Keidler, Thomas, 87724 Ottobeuren (DE)
(74) Vertreter: Meyer, Thorsten

(56) Entgegenhaltungen:
- DE-A1- 2 162 729
- DE-A1- 2 517 551
- DE-A1- 3 034 007
- DE-A1-102011 011 772

## Beschreibung

Die Erfindung betrifft eine Zuluft-Wanddurchführung, zum Einbau in einer zu durchführenden Wand eines Gebäudes mit einer Wand-Außenseite und einer Wand-Innenseite, mit einem Kanal mit einem die Außenluft an der Wand-Außenseite ansaugenden Außenseiten-Ende und einem Innenseiten-Ende zur Abgabe der angesaugten Luft an der Wand-Innenseite an eine hinter der Wand in einem Innenbereich befindliche Feuerstätte/Brennkraftmaschine, wobei im Kanal wenigstens eine Klappe oder Lamelle vorgesehen ist, vermittels welcher der Kanal für die von außen zugeführte Zuluft verschlossen werden kann, wobei eine die Klappe/n oder die Lamelle/n betätigende Betätigungsvorrichtung vorhanden ist.

Eine Zuluft-Wanddurchführung mit einer in einem in einem Kanal angeordneten Klappe ist aus der DE 10 2011 011 772 A bekannt.

Moderne Häuser sind wegen der möglicht hohen Energieeffizienz inzwischen so Luftdicht konzipiert, dass es bei der Luftzuführung von außen zu Problemen kommt, da die Dichtigkeit des Hauses ein Luftaustausch gerade zur Energieeinsparung unterbindet.

Daher sind Be- und Entlüftungszugänge durch das Mauerwerk notwendig, um beispielsweise im innern des Hauses liegende Feuerstellen oder -stätten als auch im Gebäude befindliche Brennkraftmaschinen oder Abluftanlagen mit Frischluft zu versorgen.

Kaminöfen im Wohnbereich werden beispielsweise immer beliebter. Der Durchzug der Kaminöfen braucht dabei einen entsprechenden Frischluftzugang für den Verbrennungsvorgang, der durch den Kamin hernach fortgeführt wird.

Daher können und zum Teil müssen bei besonders luftdichten Gebäuden die Kaminöfen mit einer Wanddurchführung mit der Außenluft verbunden werden.

Ohne einen den Zuluft-Kanal verschließende Klappe bei Nichtbetrieb des Ofens erfolgt jedoch eine Auskühlung der Verbrennungsluftleitung bzw. des kompletten Ofens und damit des Innenbereichs hinter der Wand. Dies hat negative Folgen auf die Energiebilanz eines Niedrigenergiehauses weil der Ofen damit eine Kältequelle im isolierten Gebäude darstellt.

Problematisch ist es allerdings, wenn solche Zuluft-Kanäle mit Klappen falsch bedient werden, also beispielsweise das Öffnen bei angefeuertem Kaminofen in der Wohnung vergessen wird oder wenn spielende Kinder die Klappe schließen. Dann kann es zu gefährlichen Situationen kommen in denen keine ausreichende Luftzufuhr mehr sichergestellt ist.

Aufgabe der Erfindung ist es eine verbesserte Zuluft-Wanddurchführung zur Verfügung zu stellen, bei der eine durchgängige Sicherstellung eines ausreichenden Luftstroms gewährleistet ist.

Diese Aufgabe wird durch eine Zuluft-Wanddurchführung nach den Merkmalen des Anspruchs 1 gelöst.

Erfindungsgemäß ist eine Zuluft-Wanddurchführung, zum Einbau in einer zu durchführenden Wand eines Gebäudes mit einer Wand-Außenseite und einer Wand-Innenseite, mit einem Kanal mit einem die Außenluft an der Wand-Außenseite ansaugenden Außenseiten-Ende und einem Innenseiten-Ende zur Abgabe der angesaugten Luft an der Wand-Innenseite an eine hinter der Wand in einem Innenbereich befindliche Feuerstätte/Brennkraftmaschine, wobei im Kanal wenigstens eine Klappe oder Lamelle vorgesehen ist, vermittels welcher der Kanal für die von außen zugeführte Zuluft verschlossen werden kann, wobei eine die Klappe/n oder die Lamelle/n betätigende Betätigungsvorrichtung vorhanden ist, vorgesehen, die sich dadurch auszeichnet, dass der Kanal an seinem Innenseiten-Ende die angesaugte Luft abgibt, und dass an einem Innenseiten-Ende-Abschnitt des Kanals wenigstens eine sich in den Innenbereich öffnende Bypass-Öffnung mit Bypass- Verschlussvorrichtung/en, insbesondere Bypass-Klappe/n angeordnet ist/sind, wobei die Betätigungsvorrichtung mit der/den Bypass-Klappe/n dergestalt mechanisch gekoppelt ist, dass die Bypass-Klappe/n geöffnet oder geschlossen wird/werden, wie die wenigstens eine Klappe/n oder Lamelle/n im Kanal gegenläufig dazu umgekehrt geschlossen oder geöffnet werden.

Die Klappe/n und Bypass-Klappe/n sind also über eine Mechanik so miteinander verbunden, das immer alle Klappen bewegt werden. Es ist ausgeschlossen, dass der Bediener nur eine Klappe einzeln bzw. nicht alle Klappen bewegen kann. Es werden durch die Bedienung immer die Klappe/n der Außenluft und die Bypass-Klappe/n der Innenluft zusammen bewegt. Die Mechanik funktioniert demnach so, dass die Klappen der Außen und Innenluft gegenläufig arbeiten.

Es ist somit ausgeschlossen, dass durch welche Bewegung / Bedienung oder anderweitige Aktion alle Klappen geschlossen oder alle Klappen geöffnet sind.

Der Kanal kann im Sinne der Erfindung einen runden, eckigen oder den Gegebenheiten der Anwendung angepassten Querschnitt haben.

Nach einer besonders bevorzugten Ausgestaltung der Erfindung ist vorgesehen, dass der Kanal an seinem Innenseiten-Ende zur Abgabe der angesaugten Luft eine definierte Öffnungsweite D aufweist, wobei die sich in den Innenbereich öffnende Bypass-Öffnung/en (zusammen) wenigstens 70%, vorzugsweise 100%, der definierten Öffnungsweite D des Kanals aufweist/aufweisen.

Der Kanal kann von Vorteil an seinem Innenseiten-Ende mittels weiterer Verlängerungen oder über ein Reduzierstück mit der Feuerstätte/Brennkraftmaschine gekoppelt sein. Insofern kann die definierten Öffnungsweite (D) durch den Querschnitt der Verlängerung oder durch das Reduzierstück als Fortsatz des Kanals definiert sein.

Von Vorteil ist vorgesehen, dass die Betätigungsvorrichtung durch ein hierzu vorgesehenes vorzugsweise elektromotorisches Stellglied oder manuell durch ein am Innenseiten-Ende-Abschnitt angeordnetes und durch diesen nach außen ragendes Bedienelement betätigt werden kann.

Bevorzugterweise ist die Betätigungsvorrichtung mit der/n Klappe/n oder Lamelle/n innerhalb des Kanals mechanisch über ein Gestänge gekoppelt.

Von Vorteil ist vorgesehen, dass die Betätigungsvorrichtung mit der/den Bypass-Klappe/n innerhalb des Kanals mechanisch über ein Gestänge gekoppelt ist.

Das Gestänge der Klappe/n ist von Vorteil symmetrisch ausgebildet und setzt an zwei beabstandet zur Schwenkachse der Klappen an der Klappe befindlichen Ansatz-Punkten an.

Ebenso von Vorteil kann vorgesehen sein, dass das Gestänge der Bypass-Klappe/n doppelt, insbesondere symmetrisch ausgebildet ist und an zwei beabstandet zur Schwenkachse der Bypass-Klappe/n an der Klappe befindlichen Punkten ansetzt.

Bevorzugterweise sind zur Verbesserung der thermischen Abdichtung im Kanal zwei miteinander mechanisch parallel gekoppelte Klappen im Zuluft-Weg hintereinander angeordnet vorgesehen.

Eine bevorzugter Weiterbildung der Erfindung sieht vor, dass die Klappe/n und Bypass-Klappe/n an in dem Kanal gelagerten Schwenkachsen verschwenkbar oder drehbar gelagert sind.

Dem folgend kann nach einer weiteren Ausgestaltung vorgesehen sein, dass wenigstens eine Feder an den Schwenkachsen der Bypass-Klappe/n oder der Klappe/n angeordnet ist, die dergestalt vorgespannt ist/sind, dass die Klappe/n in der Stellung "offen" bzw. die die Bypass-Klappe/n in der Stellung "geschlossen" gehalten oder in diese verbracht werden.

Eine vorteilhafter Variante der Erfindung sieht vor, dass die Öffnungsweite D des/der Bypass-Öffnung/en wenigstens 30 Quadratzentimeter beträgt. Hierdurch ist eine ausreichende Belüftung sichergestellt.

Nach einer vorteilhafter Weiterbildung ist vorgesehen, dass ein Arretierungselement zur Festlegung des Bedienelements oder der Betätigungsvorrichtung oder der Klappe/n oder Bypass-Klappe/n vorgesehen ist, welches eine Festlegung nur in zwei Endlagen als Stellung der Klappen als "ganz offen" oder "ganz geschlossen" zulässt.

Eine optimale Anpassung an Kanal zum einen und eine dahinter angeordnete Feuerstätte/Brennkraftmaschine kann nach einer weiteren Ausgestaltung der Erfindung dadurch erfolgen, dass das Endstück des Innenseiten-Ende-Abschnitts des Kanals als Rohr-Ansatzstück ausgebildet ist und als Aufsatzteil auf den Innenseiten-Ende-Abschnitt ausgebildet ist, wobei die Achse des Kanals zur Achse des Rohr-Ansatzstück einen wählbaren Versatz aufweist.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:
- Fig. 1: eine schematische Ansicht eine erfindungsgemäßen Zuluft-Wanddurchführung mit geöffneten Bypass-Klappen,
- Fig. 2: die Zuluft-Wanddurchführung aus Fig. 1 eingebaut in einer Wand in einer schematischen Schnitt-Darstellung, mit geschlossenen Bypass-Klappen (Klappen im Kanal geöffnet),
- Fig. 3: die in einer Wand eingebaute Zuluft-Wanddurchführung aus Fig. 2 mit geöffneten Bypass-Klappen (Klappen im Kanal geschlossen),
- Fig. 4: die Zuluft-Wanddurchführung aus Fig. 1 in einer schematischen Teil-Schnitt-Darstellung mit geschlossenen Bypass-Klappen,
- Fig. 5: die Zuluft-Wanddurchführung aus Fig. 4 aus einem anderen Blickwinkel,
- Fig. 6: die Zuluft-Wanddurchführung entsprechend Fig. 4 mit geöffneten Bypass-Klappen in einer schematischen Teil-Schnitt-Darstellung,
- Fig. 7: die Zuluft-Wanddurchführung aus Fig. 6 aus einem anderen Blickwinkel,
- Fig. 8: eine schematische Ansicht der Zuluft-Wanddurchführung mit geöffnetem Innenseiten-Ende-Abschnitt mit Blick auf die Betätigungsvorrichtung und eine Feder einer Bypass-Klappe,
- Fig. 9 bis 11: eine Detaildarstellung des Bedienelements in Zusammenwirkung mit dem Arretierungselement in verschiedenen Stellungen,
- Fig. 12 bis 14: die Zuluft-Wanddurchführung mit abgenommenem Aufsatzteil und Aufsatzteilen nach zwei verschiedenen Varianten zur Anpassung an die Position eines Lufteinlasses eines Ofens, und
- Fig. 15: eine erfindungsgemäße Zuluft-Wanddurchführung mit Kanalverlängerung und Gitteraufsatz im eingebauten Zustand in einer Wand mit daran angeschlossenem Kaminofen.

Die in den Figuren gleichen Bezugsziffern bezeichnen gleiche oder gleich wirkende Elemente.

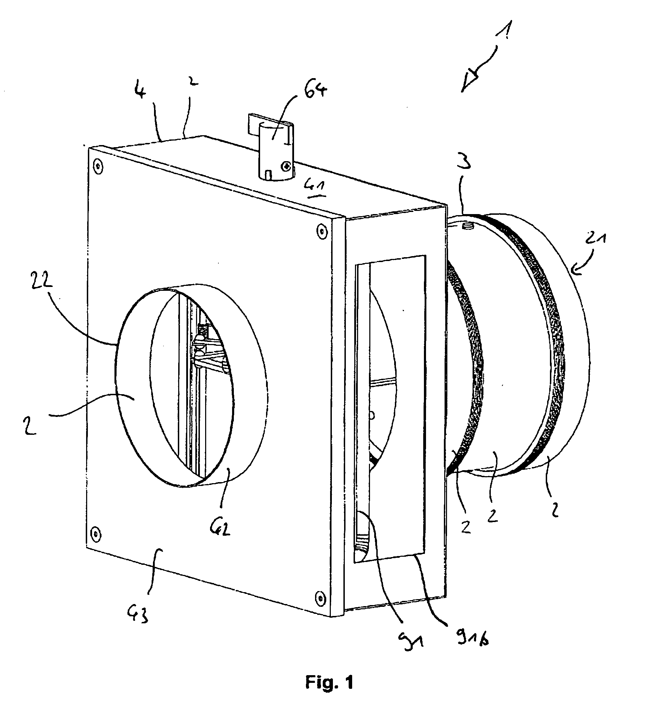

In Fig. 1 ist eine Seitenansicht auf eine Zuluft-Wanddurchführung 1 mit einer geöffneten Bypass-Klappe 91b als Bypass-Verschlussvorrichtung dargestellt.

Zuluft-Wanddurchführung 1 weist einem Kanal 2 auf, der mittels Klappen 31 und 32 für die von außen zugeführte Zuluft verschlossen werden kann, wobei eine die Klappen 31, 32 betätigende Betätigungsvorrichtung 6 vorhanden ist. Diese wird im gezeigten Beispiel durch ein hierzu vorgesehenes manuell durch ein am Innenseiten-Ende-Abschnitt 4 angeordnetes und durch diesen nach außen ragendes Bedienelement 64 betätigt.

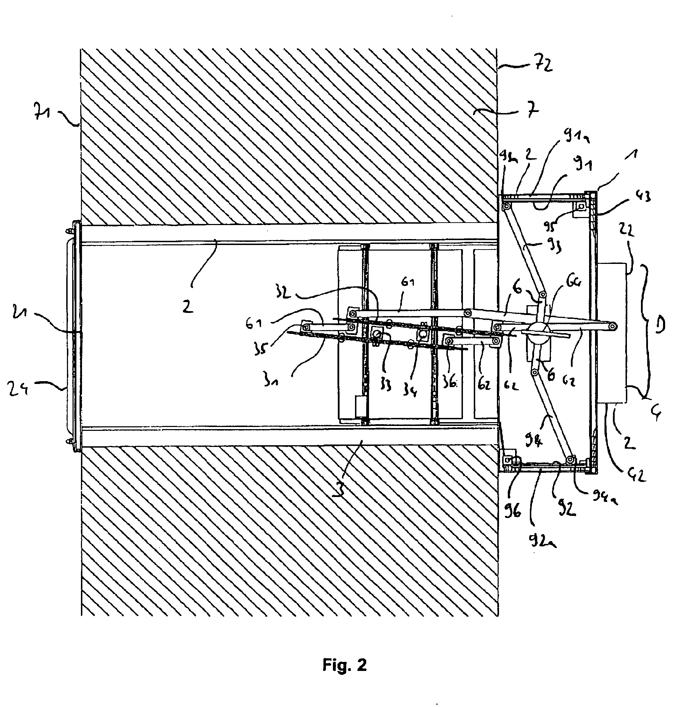

Wie aus Fig. 2 im eingebauten Zustand durch eine Wand 7 ersichtlich, befindet sich ein Außenseiten-Ende-Abschnitt 3 des Kanals 2 innerhalb der Wand von der Wand-Außenseite 71 bis zum Innenseiten-Ende-Abschnitt 4 des Kanals 2, der ab der Wand-Innenseite 72 in den Innenraum hineinragt. Die Außenluft wird an der Wand-Außenseite 71 durch das Außenseiten-Ende 21 ansaugt und an einem Innenseiten-Ende 22 an eine hinter der Wand 7 in einem Innenbereich befindliche Feuerstätte/Brennkraftmaschine abgegeben.

Der Kanal 2 gibt an seinem Innenseiten-Ende 22 die angesaugte Luft ab. An einem Innenseiten-Ende-Abschnitt 4 des Kanals 2 befinden sich im gezeigten Beispiel zwei in den Innenbereich öffnende Bypass-Öffnungen 91b, 92b mit diese verschließende Bypass-Klappen 91, 92.

Im Kanal 2 sind zur verbesserten thermischen Isolation zwei miteinander mechanisch parallel gekoppelte Klappen 31 und 32 im Zuluft-Weg hintereinander angeordnet.

Der Kanal 2 weist an seinem Innenseiten-Ende 22 zur Abgabe der angesaugten Luft eine definierte Öffnungsweite D auf, wobei die sich in den Innenbereich öffnende Bypass-Öffnungen 91b, 92b zusammen im gezeigten Beispiel 100% (D/2 + D/2 = D) der definierten Öffnungsweite D des Kanals 2 aufweisen.

Eine Betätigungsvorrichtung 6 ist mit den Bypass-Klappen 91, 92 dergestalt mechanisch gekoppelt, dass die Bypass-Klappen 91, 92 geöffnet oder geschlossen werden, wie die Klappen 31, 32 im Kanal 2 gegenläufig dazu umgekehrt geschlossen oder geöffnet werden.

In Fig. 2 ist zudem ein am Außenseiten-Ende 21 des Kanals 2 angeordneter Gitteraufsatz 24 ersichtlich. Dieser dient dem Abhalten von Kleinteilen und Tieren.

Die Betätigungsvorrichtung 6 ist mit den Klappen 31, 32 innerhalb des Kanals 2 mechanisch über ein Gestänge 61, 62 gekoppelt. Des weiteren ist die Betätigungsvorrichtung 6 auch mit den Bypass-Klappen 91, 92 innerhalb des Kanals 2 mechanisch über ein weiteres Gestänge 93, 94 gekoppelt.

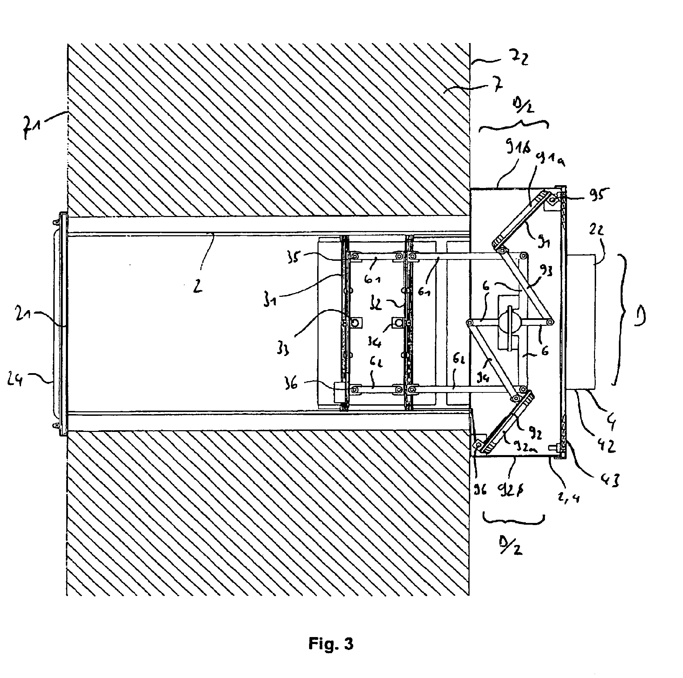

In Fig. 3 ist die die in einer Wand eingebaute Zuluft-Wanddurchführung aus Fig. 2 mit geöffneten Bypass-Klappen gezeigt. Hier ist gut ersichtlich, dass im Beispiel das Gestänge 61, 62 der Klappen 31,32 symmetrisch ausgebildet ist und an zwei beabstandet zur Schwenkachse 33, 34 der Klappen 31, 32 an der Klappe befindlichen Ansatz-Punkten 35, 36 ansetzt.

Ebenso ist das Gestänge (93, 94) der Bypass-Klappen (91, 92) doppelt symmetrisch ausgebildet und setzt an zwei beabstandet zur Schwenkachse (95, 96) der Bypass-Klappen (91, 92) an der Klappe befindlichen Punkten (93a, 94a) an. Die Klappen (31, 32) und Bypass-Klappen (91, 92) sind an in dem Kanal (2) gelagerten Schwenkachsen (33, 34, 95, 96) verschwenkbar bzw. drehbar gelagert.

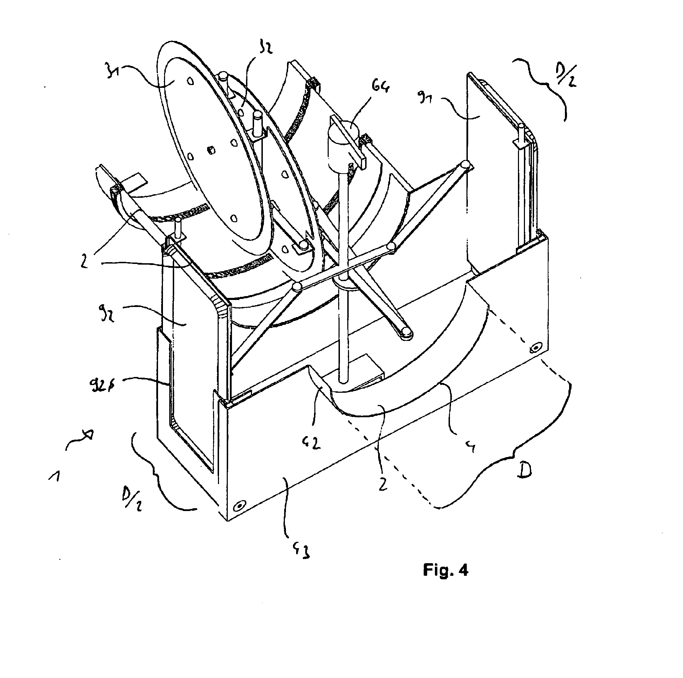

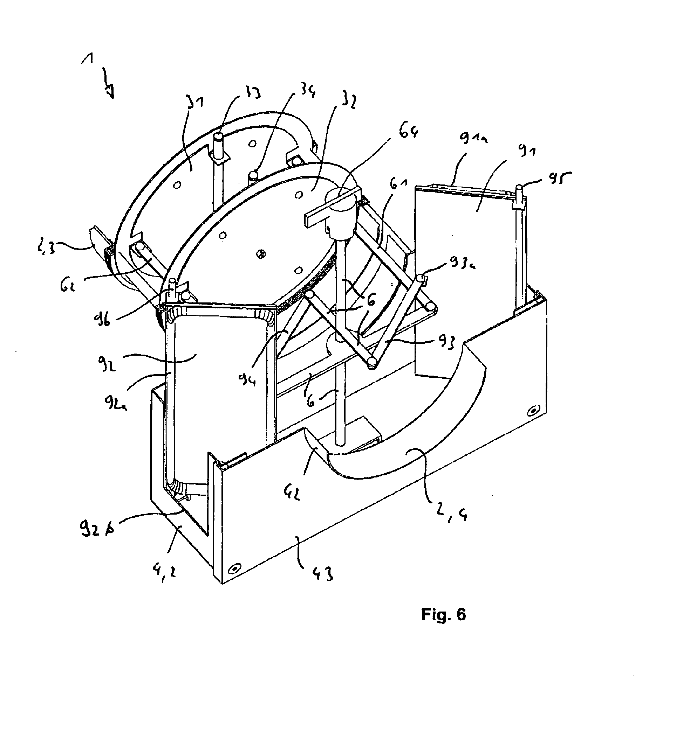

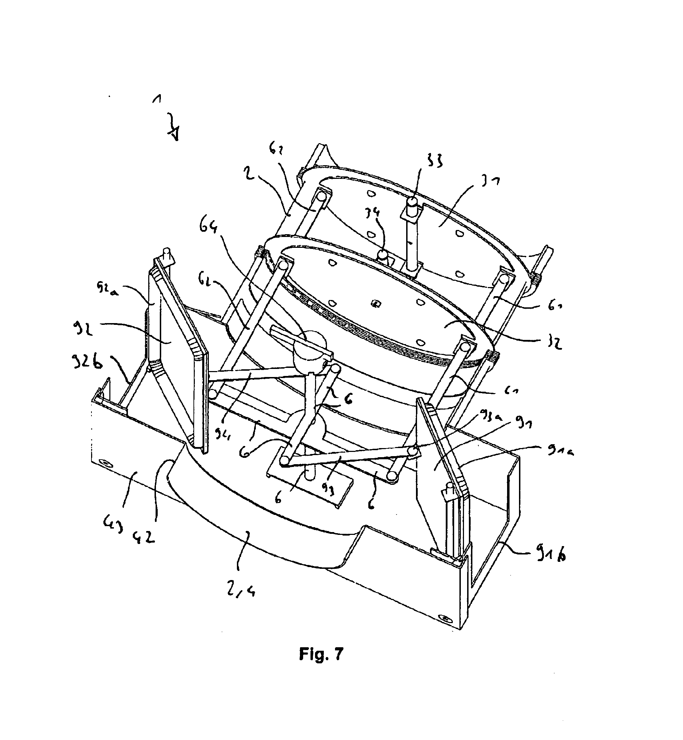

Die Zusammenwirkung der Betätigungsvorrichtung (6) mit den Gestängen 61, 62 und 93, 94 ist aus den Teil-Schnittdarstellungen nach den Fig. 4 bis 7 näher ersichtlich.

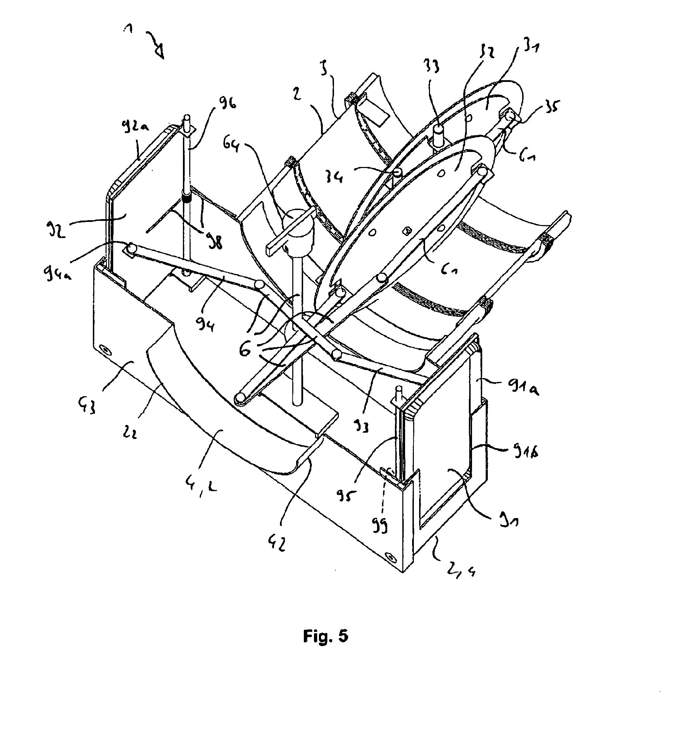

In Fig. 5 sind zudem die Federn 98, 99 an den Schwenkachsen 95, 96 der Bypass-Klappe/n 91, 92 angeordnet zusehen. Diese sind dergestalt vorgespannt, dass die Bypass-Klappen 91, 92 bzw. die Klappen 31, 32 in der Stellung "geschlossen" gehalten oder in diese verbracht werden.

So besteht z.B. die Problematik, dass Außenluft durch eine nicht komplett geschlossene Innenluftklappe in den Raum und nicht in die Ofenanlage gelangt. Dies hätte zur Folge, dass der Raum auskühlt. Kältebrücke in den Raum. Aus diesem Grund wird mittels Federn sichergestellt, dass die Innenluftklappen immer automatisch geschlossen werden.
Dies hat wiederum natürlich zur Folge das die Außenluftklappen immer in die Stellung "geöffnet" verbracht werden.

Um nun ein ungewolltes automatisches Öffnen der Klappen 31, 32durch die Federn 98, 99 zu verhindern, ist ein Arretierungselement 65 zur Festlegung des Bedienelements 64 und damit der Betätigungsvorrichtung 6 vorgesehen. Hierdurch werden die damit über die Gestänge gesteuerten Klappen 31, 32 und Bypass-Klappen 91, 92 fixiert.

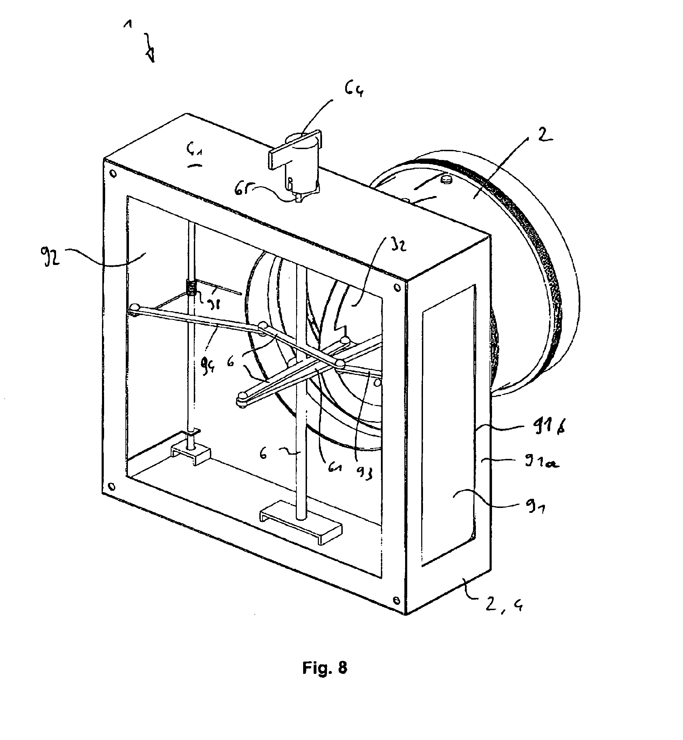

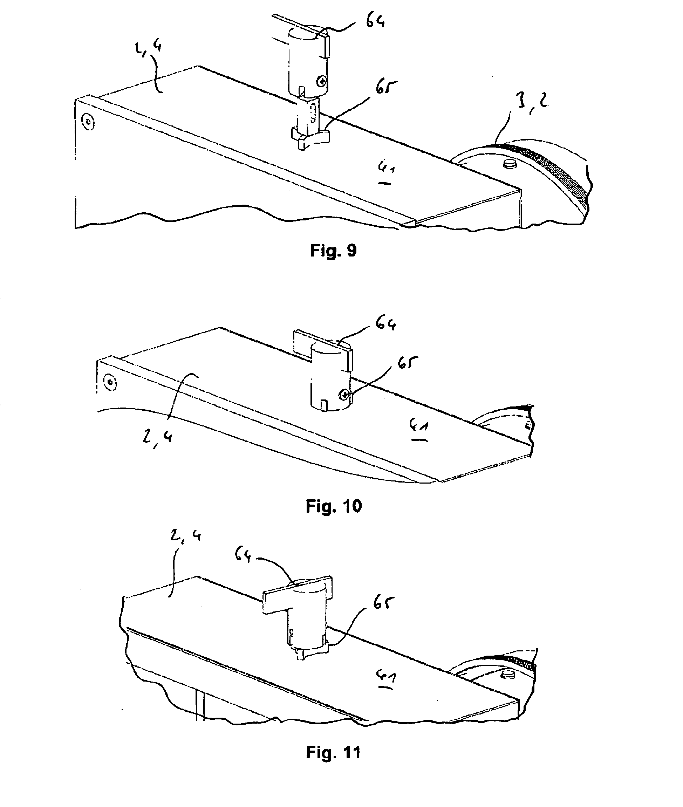

Dies ist in den Fig. 8 bis 11 näher erläutert.

Durch eine mit dem Bedienelements 64 zusammenwirkende formschlüssige Struktur des Arretierungselements 65, ist eine Festlegung nur in zwei Endlagen als Stellung der Klappen als "ganz offen" oder "ganz geschlossen" gewährleistet.

Die Zugkraft der Federn sorgt hierbei für zusätzliche Arretierung.

Sollte der Bediener das Bedienelement 64 durch eine Fehlbedienung nicht richtig einrasten, so wandert der Griff und damit die Klappen - bedingt durch die Federkraft - immer wieder an die gewünschte betriebssichere Ausgangspositionen, also Außenluft komplett auf, Innenluft - durch die Bypass-Klappen - komplett zu.

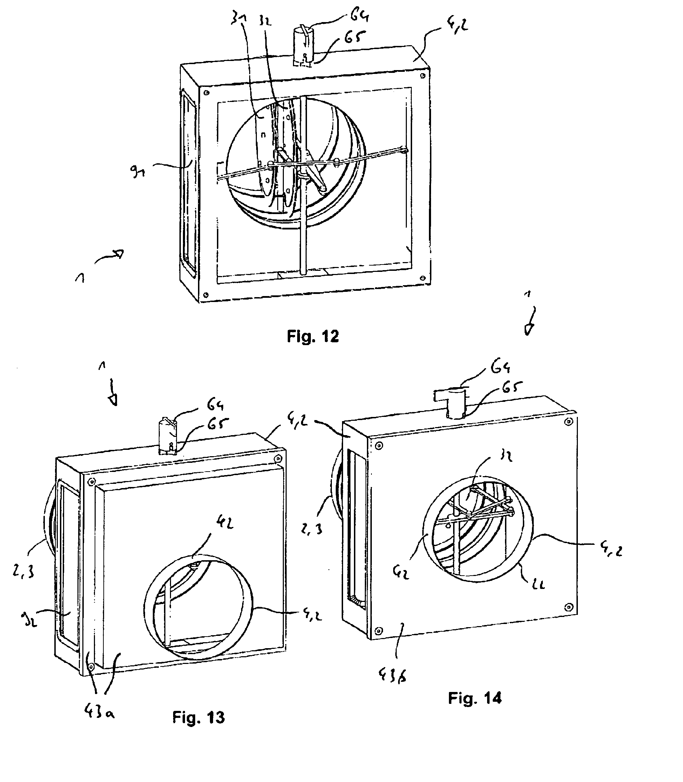

In den Fig. 12 bis 14 ist schließlich noch eine weitere Vorteilhafte Variante der Erfindung zur Anpassung an nicht Kanal-Achsensymmetrische Öfen gezeigt.

Demnach ist das Endstück des Innenseiten-Ende-Abschnitts 4 des Kanals 2 als Rohr-Ansatzstück 42 ausgebildet und als Aufsatzteil 43 auf den Innenseiten-Ende-Abschnitt 4 ausgebildet, wobei die Achse des Kanals 2 zur Achse des Rohr-Ansatzstück 42 einen wählbaren Versatz aufweist.

In Fig. 13 ist ein Aufsatzteil 43 mit zur Kanal-Achse versetztem Rohr-Ansatzstück 42 gezeigt, in der Variante nach Fig. 14 ist ein Aufsatzteil 43 mit zur Kanal-Achse fluchtendem Rohr-Ansatzstück 42 gezeigt.

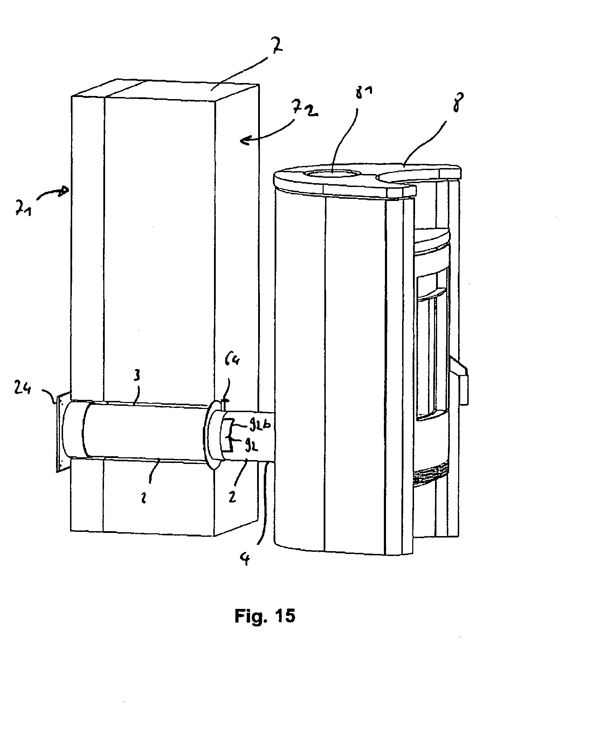

Fig. 15 schließlich zeigt ein Beispiel mit montiertem Kaminofen 8, der den durch den durch eine Wand 7 reichenden Kanal 2 angesaugten Luftstrom durch ein Fortluft-Ofenrohr-Öffnung 81 abführt. Im gezeigten Beispiel ist die Bypass-Klappen 92 zudem an die Krümmung des als Rohr ausgeführten Innenseiten-Ende-Abschnitts 4 des Kanals 2 angepasst.

### Bezugszeichenliste

- 1: Zuluft-Wanddurchführung
- 2: Kanal
- 21: Außenseiten-Ende
- 22: Innenseiten-Ende
- 24: Gitteraufsatz

- 3: Außenseiten-Ende-Abschnitt
- 31, 32: Klappe
- 33, 34: Schwenkachse
- 35, 36: Ansatz-Punkt
- 38: Achse

- 4: Innenseiten-Ende-Abschnitt
- 42: Rohr-Ansatzstück
- 43,: Aufsatzteil
- 43a, 43b: Aufsatzteil

- 6: Betätigungsvorrichtung
- 61, 62: Gestänge
- 64: Bedienelement
- 65: Arretierungselement

- 7: Wand
- 71: Außenseite
- 72: Innenseite

- 8: Kaminofen
- 81: Fortluft-Ofenrohr-Öffnung

- 91, 92: Bypass-Klappe
- 91b, 92b: Bypass-Öffnung
- 93, 94: Gestänge
- 93a, 94a: Ansatz-Punkt
- 95, 96: Schwenkachsen
- 98, 99: Feder

- D: definierte Öffnungsweite

## Patentansprüche

1. Zuluft-Wanddurchführung (1), zum Einbau in einer zu durchführenden Wand (7) eines Gebäudes mit einer Wand-Außenseite (71) und einer Wand-Innenseite (72), mit einem Kanal (2) mit einem die Außenluft an der Wand-Außenseite (71) ansaugenden Außenseiten-Ende (21) und einem Innenseiten-Ende (22) zur Abgabe der angesaugten Luft an der Wand-Innenseite (72) an eine hinter der Wand (7) in einem Innenbereich befindliche Feuerstätte/Brennkraftmaschine (8), wobei im Kanal (2) wenigstens eine Klappe (31, 32) oder Lamelle vorgesehen ist, vermittels welcher der Kanal (2) für die von außen zugeführte Zuluft verschlossen werden kann, wobei eine die Klappe/n (31, 32) oder die Lamelle/n betätigende Betätigungsvorrichtung (6) vorhanden ist,
**dadurch gekennzeichnet,**
**dass** der Kanal (2) an seinem Innenseiten-Ende (22) die angesaugte Luft abgibt, und dass an einem Innenseiten-Ende-Abschnitt (4) des Kanals (2) wenigstens eine sich in den Innenbereich öffnende Bypass-Öffnung (91b, 92b) mit Bypass-Verschlussvorrichtung/en, insbesondere Bypass-Klappe/n (91, 92) angeordnet ist/sind, wobei die Betätigungsvorrichtung (6) mit der/den Bypass-Klappe/n (91, 92) dergestalt mechanisch gekoppelt ist, dass die Bypass-Klappe/n (91, 92) geöffnet oder geschlossen wird/werden, wie die wenigstens eine Klappe/n (31, 32) oder Lamelle/n im Kanal (2) gegenläufig dazu umgekehrt geschlossen oder geöffnet werden.

2. Zuluft-Wanddurchführung nach Anspruch 1,
**dadurch gekennzeichnet,**
**dass** der Kanal (2) an seinem Innenseiten-Ende (22) zur Abgabe der angesaugten Luft eine definierte Öffnungsweite (D) aufweist, wobei die sich in den Innenbereich öffnende Bypass-Öffnung/en (91b, 92b) (zusammen) wenigstens 70%, vorzugsweise 100%, der definierten Öffnungsweite (D) des Kanals (2) aufweist/aufweisen.

3. Zuluft-Wanddurchführung nach Anspruch 1 oder 2,
**dadurch gekennzeichnet,**
**dass** die Betätigungsvorrichtung (6) durch ein hierzu vorgesehenes vorzugsweise elektromotorisches Stellglied oder manuell durch ein am Innenseiten-Ende-Abschnitt (4) angeordnetes und durch diesen nach außen ragendes Bedienelement (64) betätigt werden kann.

4. Zuluft-Wanddurchführung nach einem der vorhergehenden Ansprüche,
**dadurch gekennzeichnet,**
**dass** die Betätigungsvorrichtung (6) mit der/n Klappe/n (31, 32) oder Lamelle/n innerhalb des Kanals (2) mechanisch über ein Gestänge (61, 62) gekoppelt ist.

5. Zuluft-Wanddurchführung nach einem der vorhergehenden Ansprüche,
**dadurch gekennzeichnet,**
**dass** die Betätigungsvorrichtung (6) mit der/den Bypass-Klappe/n (91, 92) innerhalb des Kanals (2) mechanisch über ein Gestänge (93, 94) gekoppelt ist.

6. Zuluft-Wanddurchführung nach Anspruch 4,
**dadurch gekennzeichnet,**
**dass** das Gestänge (61, 62) der Klappe/n (31,32) symmetrisch ausgebildet ist und an zwei beabstandet zur Schwenkachse (33, 34) der Klappen (31, 32) an der Klappe befindlichen Ansatz-Punkten (35, 36) ansetzt.

7. Zuluft-Wanddurchführung nach Anspruch 5,
**dadurch gekennzeichnet,**
**dass** das Gestänge (93, 94) der Bypass-Klappe/n (91, 92) doppelt, insbesondere symmetrisch ausgebildet ist und an zwei beabstandet zur Schwenkachse (95, 96) der Bypass-Klappe/n (91, 92) an der Klappe befindlichen Punkten (93a, 94a) ansetzt.

8. Zuluft-Wanddurchführung nach einem der vorhergehenden Ansprüche,
**dadurch gekennzeichnet,**
**dass** im Kanal (2) zwei miteinander mechanisch parallel gekoppelte Klappen (31 und 32) im Zuluft-Weg hintereinander angeordnet vorgesehen sind.

9. Zuluft-Wanddurchführung nach einem der vorhergehenden Ansprüche,
**dadurch gekennzeichnet,**
**dass** die Klappe/n (31, 32) und Bypass-Klappe/n (91, 92) an in dem Kanal (2) gelagerten Schwenkachsen (33, 34, 95, 96) verschwenkbar oder drehbar gelagert sind.

10. Zuluft-Wanddurchführung nach Anspruch 9,
**dadurch gekennzeichnet,**
**dass** wenigstens eine Feder (98, 99) an den Schwenkachsen (95, 96) der Bypass-Klappe/n (91, 92) oder der Klappe/n (31, 32) angeordnet ist, die dergestalt vorgespannt ist/sind, dass die Klappe/n (31, 32) in der Stellung "offen" bzw. die die Bypass-Klappe/n (91, 92) in der Stellung "geschlossen" gehalten oder in diese verbracht werden.

11. Zuluft-Wanddurchführung nach einem der vorhergehenden Ansprüche,
**dadurch gekennzeichnet,**
**dass** die Öffnungsweite (D) des/der Bypass-Öffnung/en (91b, 92b) wenigstens 30 Quadratzentimeter beträgt.

12. Zuluft-Wanddurchführung nach einem der vorhergehenden Ansprüche,
**dadurch gekennzeichnet,**
**dass** ein Arretierungselement (65) zur Festlegung des Bedienelements (64) oder der Betätigungsvorrichtung (6) oder der Klappe/n (31, 32) oder Bypass-Klappe/n (91, 92) vorgesehen ist, welches eine Festlegung nur in zwei Endlagen als Stellung der Klappen als "ganz offen" oder "ganz geschlossen" zulässt.

13. Zuluft-Wanddurchführung nach einem der vorhergehenden Ansprüche,
**dadurch gekennzeichnet,**
**dass** das Endstück des Innenseiten-Ende-Abschnitts (4) des Kanals (2) als Rohr-Ansatzstück (42) ausgebildet ist und als Aufsatzteil (43) auf den Innenseiten-Ende-Abschnitt (4) ausgebildet ist, wobei die Achse des Kanals (2) zur Achse des Rohr-Ansatzstück (42) einen wählbaren Versatz aufweist.

## Claims

1. A feed air wall bushing (1), for installation in a building wall (7) through which the bushing is to pass, said wall having a wall outer side (71) and a wall inner side (72), having a duct (2) with an outer side end (21), which sucks in the external air on the wall outer side (71), and with an inner side end (22), for discharging the sucked-in air on the wall inner side (72) to a furnace/internal combustion engine (8), which is situated in an interior region behind the wall (7), at least one flap (31, 32) or slat being provided in the duct (2), by means of which flap or slat the duct (2) can be closed to the feed air supplied from the outside, an actuation device (6) that actuates the flap(s) (31, 32) or slat(s) being present,
**characterised in that**
the duct (2) discharges the sucked-in air at its inner side end (22), and that at least one bypass opening (91b, 92b), which opens into the interior region and has bypass closure device(s), in particular bypass flap(s) (91, 92), is arranged on an inner side end section (4) of the duct (2), wherein the actuation device (6) is mechanically coupled to the bypass flap(s) (91, 92) in such a manner that the bypass flap(s) (91, 92) is/are opened or closed as the at least one flap (31, 32) or slat in the duct (2) is closed or opened conversely thereto.

2. The feed air wall bushing according to claim 1, **characterised in that**
the duct (2) has a defined opening width (D) at its inner side end (22) for discharging the sucked-in air, wherein the bypass opening(s) (91b, 92b) that open into the interior region has/have (together) at least 70 %, preferably 100 % of the defined opening width (D) of the duct (2).

3. The feed air wall bushing according to claim 1 or 2,
**characterised in that**
the actuation device (6) can be actuated by a preferably electric-motor-driven actuation member provided therefor or manually by an operating element (64), which is arranged on the inner side end section (4) and projects outwards through the latter.

4. The feed air wall bushing according to any one of the preceding claims,
**characterised in that**
the actuation device (6) is mechanically coupled to the flap(s) (31, 32) or slat(s) inside the duct (2) by means of a rod assembly (61, 62).

5. The feed air wall bushing according to any one of the preceding claims,
**characterised in that**
the actuation device (6) is mechanically coupled to the bypass flap(s) (91, 92) inside the duct (2) by means of a rod assembly (93, 94).

6. The feed air wall bushing according to claim 4,
**characterised in that**
the rod assembly (61, 62) of the flap(s) (31, 32) has a symmetrical configuration and is attached at two attachment points (35, 36), which are situated on the flap, at a distance from the pivot axle (33, 34) of the flaps (31, 32).

7. The feed air wall bushing according to claim 5,
**characterised in that**
the rod assembly (93, 94) of the bypass flap(s) (91, 92) has a double, in particular symmetrical, configuration and is attached at two points (93a, 94a), which are situated on the flap, at a distance from the pivot axle (95, 96) of the bypass flaps (91, 92).

8. The feed air wall bushing according to any one of the preceding claims,
**characterised in that**
two flaps (31 and 32), which are coupled mechanically to each other in parallel, are provided arranged one behind the other in the feed air path in the duct (2).

9. The feed air wall bushing according to any one of the preceding claims,
**characterised in that**
the flap(s) (31, 32) and bypass flap(s) (91, 92) are mounted pivotably or rotatably on pivot axles (33, 34, 95, 96) mounted in the duct (2).

10. The feed air wall bushing according to claim 9,
**characterised in that**
at least one spring (98, 99) is arranged on the pivot axles (95, 96) of the bypass flap(s) (91, 92) or flap(s) (31, 32), which spring is prestressed in such a manner that the flap(s) (31, 32) are held in or brought into the "open" position and the bypass flap(s) (91, 92) are held in or brought into the "closed" position.

11. The feed air wall bushing according to any one of the preceding claims,
**characterised in that**
the opening width (D) of the bypass opening(s) (91b, 92b) is at least 30 square centimetres.

12. The feed air wall bushing according to any one of the preceding claims,
**characterised in that**
a locking element (65) is provided for fixing the operating element (64) or the actuation device (6) or the flap(s) (31, 32) or bypass flap(s) (91, 92), which locking element allows fixing only in two end positions of the flaps as "completely open" or "completely closed".

13. The feed air wall bushing according to any one of the preceding claims,
**characterised in that**
the end piece of the inner side end section (4) of the duct (2) is formed as a pipe attachment piece (42) and as an attachment part (43) on the inner side end section (4), wherein the axis of the duct (2) has a selectable offset from the axis of the pipe attachment piece (42).

## Revendications

1. Passage mural d'air entrant (1) destiné à être intégré dans un mur traversant (7) d'un bâtiment avec un côté extérieur de mur (71) et un côté intérieur de mur (72), avec un canal (2) présentant une extrémité de côté extérieur (21) aspirant l'air extérieur du côté extérieur du mur (71) et une extrémité de côté intérieur (22) permettant de fournir l'air aspiré du côté intérieur du mur (72) à un foyer/moteur à combustion interne (8) situé dans une région intérieure derrière le mur (7), dans lequel il est prévu au moins un clapet (31, 32) ou une lamelle dans le canal (2), permettant de fermer le canal (2) par rapport à l'air entrant alimenté depuis l'extérieur, un dispositif d'actionnement (6) étant prévu pour actionner le(s) clapet(s) (31, 32) ou la/les lamelle(s),
**caractérisé en ce que**
le canal (2) délivre l'air aspiré à son extrémité de côté intérieur (22), et **en ce qu'**au moins une ouverture de dérivation (91b, 92b) débouchant dans la région intérieure, en particulier un/des clapet(s) de dérivation (91, 92), est/sont agencé(s) au niveau d'une section d'extrémité de côté intérieur (4) du canal (2), le dispositif d'actionnement (6) étant accouplé mécaniquement au(x) clapet(s) de dérivation (91, 92) de manière à ce que le(s) clapet(s) de dérivation (91, 92) puisse/puissent être ouvert(s) ou fermé(s) lorsque l'au moins un clapet (31, 32) ou l'au moins une lamelle situé(e) dans le canal (2) est/sont fermé(s) ou ouvert(s) inversement de façon opposée.

2. Passage mural d'air entrant selon la revendication 1,
**caractérisé en ce que**
le canal (2) présente, à son extrémité de côté intérieur (22), un diamètre d'ouverture défini (D) pour délivrer l'air aspiré, sachant que l'ouverture/les ouvertures de dérivation (91b, 92b) débouchant dans la région intérieure représente/représentent (ensemble) au moins 70 %, de préférence 100 %, du diamètre d'ouverture défini (D) du canal (2).

3. Passage mural d'air entrant selon la revendication 1 ou 2,
**caractérisé en ce que**
le dispositif d'actionnement (6) peut être actionné par un organe de réglage de préférence électromoteur prévu à cette fin, ou manuellement par un élément de commande (64) agencé sur la section d'extrémité de côté intérieur (4) et faisant saillie vers l'extérieur à travers celle-ci.

4. Passage mural d'air entrant selon l'une des revendications précédentes,
**caractérisé en ce que**
le dispositif d'actionnement (6) est accouplé mécaniquement au(x) clapet(s) (31, 32) ou au(x) lamelle(s) à l'intérieur du canal (2), par le biais d'une tringlerie (61, 62).

5. Passage mural d'air entrant selon l'une des revendications précédentes,
**caractérisé en ce que**
le dispositif d'actionnement (6) est accouplé mécaniquement au(x) clapet(s) de dérivation (91, 92) à l'intérieur du canal (2) par le biais d'une tringlerie (93, 94).

6. Passage mural d'air entrant selon la revendication 4,
**caractérisé en ce que**
la tringlerie (61, 62) du/des clapet (s) (31, 32) est conçue de façon symétrique et s'applique sur deux points de départ (35, 36) situés sur le clapet, à distance de l'axe de pivotement (33, 34) des clapets (31, 32).

7. Passage mural d'air entrant selon la revendication 5,
**caractérisé en ce que**
la tringlerie (93, 94) du/des clapet(s) de dérivation (91, 92) est conçue en double, en particulier de façon symétrique, et s'applique sur deux points (93a, 94a) situés sur le clapet, à distance de l'axe de pivotement (95, 96) du/des clapet(s) de dérivation (91, 92).

8. Passage mural d'air entrant selon l'une des revendications précédentes,
**caractérisé en ce que**
dans le canal (2), il est prévu deux clapets (31 et 32) accouplés mécaniquement l'un à l'autre en parallèle et agencés l'un derrière l'autre sur le trajet d'air entrant.

9. Passage mural d'air entrant selon l'une des revendications précédentes,
**caractérisé en ce que**
le(s) clapet(s) (31, 32) et le(s) clapet(s) de dérivation (91, 92) peuvent pivoter ou sont montés de façon rotative sur deux axes de pivotement (33, 34, 95, 96) montés dans le canal (2).

10. Passage mural d'air entrant selon la revendication 9,
**caractérisé en ce que**
au moins un ressort (98, 99) est agencé sur les axes de pivotement (95, 96) du/des clapet(s) de dérivation (91, 92) ou du/des clapet(s) (31, 32), lequel/lesquels est/sont précontraint(s) de manière à ce que le(s) clapet(s) (31, 32) est/sont maintenu(s) ou mis dans la position « ouvert », ou le(s) clapet(s) de dérivation (91, 92) est/sont maintenu(s) ou mis dans la position « fermé ».

11. Passage mural d'air entrant selon l'une des revendications précédentes,
**caractérisé en ce que**
le diamètre d'ouverture (D) de l'ouverture/des ouvertures de dérivation (91b, 92b) mesure au moins 30 centimètres carrés.

12. Passage mural d'air entrant selon l'une des revendications précédentes,
**caractérisé en ce que**
un élément d'arrêt (65) est prévu pour l'immobilisation de l'élément de commande (64) ou du dispositif d'actionnement (6) ou du/des clapet(s) (31, 32) ou du/des clapet(s) de dérivation (91, 92), lequel permet une immobilisation uniquement dans deux positions finales en tant que positions « complètement ouvert » ou « complètement fermé » des clapets.

13. Passage mural d'air entrant selon l'une des revendications précédentes,
**caractérisé en ce que**
la partie finale de la section d'extrémité de côté intérieur (4) du canal (2) est conçue comme une pièce de raccordement de tuyau (42) et conçue comme une pièce de coiffe (43) sur la section d'extrémité de côté intérieur (4), l'axe du canal (2) présentant un décalage ajustable par rapport à l'axe de la pièce de raccordement de tuyau (42).
